# EUROPEAN PATENT SPECIFICATION

(11) **EP 4 030 053 B1**
(45) Date of publication and mention of the grant of the patent: **26.07.2023**
(21) Application number: 20875221.2
(22) Date of filing: 03.06.2020
(51) Int. Cl.: F03D 9/18, F24H 7/00, F28D 20/00

(54) **ENERGY STORAGE APPARATUS, ENERGY STORAGE SYSTEM, ENERGY STORAGE METHOD, AND WIND TURBINE**
ENERGIESPEICHERVORRICHTUNG, ENERGIESPEICHERSYSTEM, ENERGIESPEICHERVERFAHREN UND WINDTURBINE
APPAREIL DE STOCKAGE D'ÉNERGIE, SYSTÈME DE STOCKAGE D'ÉNERGIE, PROCÉDÉ DE STOCKAGE D'ÉNERGIE ET ÉOLIENNE

(30) Priority: 12.10.2019 CN 201910969885
(43) Date of publication of application: 20.07.2022
(73) Proprietor: Xinjiang Goldwind Science & Technology Co., Ltd., Xinjiang 830026 (CN)
(72) Inventor: BAI, Liang, Beijing 100176 (CN); LIU, Yan, Beijing 100176 (CN); ZHANG, Caisheng, Beijing 100176 (CN); XU, Kexin, Beijing 100176 (CN); WANG, Feng, Beijing 100176 (CN)
(74) Representative: Gulde & Partner
(86) International application number: PCT/CN2020/094188
(87) International publication number: WO 2021/068534

(56) References cited:
- CN-A- 106 762 418
- CN-A- 106 762 418
- CN-A- 108 106 009
- CN-A- 108 106 009
- CN-A- 108 106 009
- CN-A- 108 204 760
- CN-A- 108 204 760
- CN-A- 108 800 575
- CN-A- 110 645 147
- CN-U- 202 835 795
- CN-U- 202 835 795
- CN-U- 202 835 795
- CN-U- 204 663 763
- DE-A1-102013 006 814
- GB-A- 1 034 929
- KR-A- 20020 017 138

## Description

### TECHNICAL FIELD

The present application relates to a technical field of energy storage, and in particular to an energy storage device, an energy storage system, an energy storage method, and a wind turbine.

### BACKGROUND

A wind turbine can convert wind energy into electrical energy through a series of electrical devices such as a generator, a converter, and a transformer. The wind turbine includes a large number of components such as a motor, an electrical system, a lubrication system, a hydraulic system and the like. These components consume electricity themselves while serving for power generation.

Since the natural wind is changing, under a condition that the wind turbine is working normally, the uncertainty of the wind condition may cause the voltage fluctuation of the generator, which in turn may cause damage to the surge protector on the generator and other components. Therefore, the above-mentioned electrical devices need to adjust the power generated in real time to meet the requirements of the life span of the wind turbine and the power grid standards. CN 202 835 795 U discloses the preamble of claim 1 and in particular a solid electric heat storage hot water boiler which comprises a boiler body, and a heat retainer is arranged in the boiler body. A plurality of heat storage brick courses are arranged in the heat retainer, adjacent heat storage brick courses are arranged in a staggered mode, and a plurality of heat storage bricks are arranged in each heat storage brick course. At least one ventilating duct used for heating or radiating is arranged on each heat storage brick, the ventilating ducts of the heat storage bricks in the same course are communicated to form a ventilating channel.

CN 108 106 009 discloses a heat storage boiler which comprises a shell, a heating device and an energy storage device; the heating device and the energy storage device are arranged in the shell; the energy storage device is composed of a plurality of energy storage bodies in a block structure; the energy storage bodies are arranged according to different manners to form the energy storage devices in different shapes; the heating device comprises a plurality of heating bodies; each energy storage body is provided with a mounting part; each heating body is installed on the corresponding mounting part; each energy storage body is made of a carbon material; and each heating body is made of graphite.

CN 108 800 575 A discloses a family type clean energy station. The energy station comprises a box and a partition plate. The partition plate divides the internal space of the box into a heat storage are and a heat release drive area. A heat storage body is arranged in the heat storage area and internally provided with heat storage channels and heat release channels. Electric heating assemblies are arranged in the heat storage channels correspondingly.

GB 1 034 929 A discloses a thermal storage heat exchanger, wherein thermal reservoir heated electrically or by a burner or furnace gases, and used for heat storage or regenerative or other heat exchange to heat media such as air or water, comprises a mass of ferrophosphorus or ferrophosphorus based material which may consist of blocks or tiles or a bed of granulated material.

KR 2002 0017138 A discloses a heat storage type electric boiler comprising a heat storage chamber, in which heat storage bricks directly heated by an electric heater are stacked. A heat exchanging chamber is communicated with the heat storage chamber through an inlet passage and an outlet passage. A heat exchanger is installed in a circulation chamber for performing the heat-exchange with circulating water. A blower is
installed below the outlet passage of the circulation chamber. An air resistor is installed at a wafer discharging pipe connected to the heat exchanger.

CN 106 762 418 A relates to the technical field of island energy systems, in particular to an island energy system based on wind power generation adjustable electricity storage and heat storage,

### SUMMARY

The purpose of the present application is to provide an energy storage device, an energy storage system, an energy storage method, and a wind turbine. The energy storage device can quickly consume the extra energy of an external energy device and store it in the form of thermal energy.

In an aspect, the embodiments of the present application provide an energy storage device, including: a housing having an accommodating cavity formed by a wall component; a heat storage component arranged in the accommodating cavity, wherein the heat storage component includes an energy storage body and a conduction component, the energy storage body is provided with a plurality of heat transfer channels penetrating through the energy storage body along a first direction, the conduction component is accommodated in the plurality of heat transfer channels, and one end of the conduction component protrudes from the wall component, so as to be electrically connected with an external energy device, wherein the energy storage body is further provided with ventilation channels penetrating through the energy storage body along a second direction, the ventilation channels and the heat transfer channels are separated from each other, and the second direction intersects the first direction.

According to the aspect of the present application, the energy storage body is a cuboid structural component made of magnesium or an alloy containing magnesium.

According to the aspect of the present application, the energy storage body includes a plurality of energy storage sub-modules spliced with each other, and each energy storage sub-module is provided with a heat transfer channel penetrating through the energy storage sub-module along the first direction.

According to the aspect of the present application, the energy storage body includes a plurality of energy storage sub-modules spliced with each other, each energy storage sub-module is a cuboid structural component, and a heat transfer channel extending along the first direction is formed between at least two adjacent energy storage sub-modules.

According to the aspect of the present application, each energy storage sub-module includes first prefabricated recesses penetrating through the energy storage sub-module along the first direction, the first prefabricated recesses are located at four corners of the energy storage sub-module, and the first prefabricated recesses of four adjacent energy storage sub-modules together form a heat transfer channel.

According to the aspect of the present application, each energy storage sub-module includes second prefabricated recesses penetrating through the energy storage sub-module along the first direction, the second prefabricated recesses are located on at least two surfaces of the energy storage sub-module, and the second prefabricated recesses of two adjacent energy storage sub-modules together form a heat transfer channel.

According to the aspect of the present application, the conduction component is an entire resistance wire continuously accommodated in the plurality of heat transfer channels.

According to the aspect of the present application, the conduction component is a plurality of resistance wires or a plurality of electric heating rods accommodated in the plurality of heat transfer channels, and the plurality of resistance wires or the plurality of electric heating rods are connected end to end in sequence.

According to the aspect of the present application, the energy storage device further includes a cooling fan, the wall component of the housing includes a first wall and a second wall oppositely arranged along the second direction, the first wall is provided with an air outlet, the air outlet is provided with a pipeline for communicating with an external device, and the cooling fan is arranged on the second wall and is arranged corresponding to the ventilation channels.

According to the aspect of the present application, the air outlet of the housing is provided with a self-hanging ventilation curtain.

According to the aspect of the present application, the wall component of the housing further includes a third wall and a fourth wall oppositely arranged along the first direction, the one end of the conduction component protrudes from the third wall, and predetermined gaps are respectively maintained between the energy storage body and the third wall and between the energy storage body and the fourth wall.

According to the aspect of the present application, an outer surface of the housing is provided with a thermal insulation layer.

According to the aspect of the present application, the heat storage component further includes a base for supporting the energy storage body, and the energy storage body and the base in the heat storage component are firmly connected as a whole through a pressing device and fixed to the wall component of the housing.

According to the aspect of the present application, the pressing device includes a pressing cover and a fastener arranged on the pressing cover, the pressing cover is pressed against the energy storage body, and the fastener is fixedly connected to the wall component of the housing. According to the aspect of the present application, the energy storage device further includes a temperature monitoring device and a controller electrically connected to the temperature monitoring device, and the temperature monitoring device is arranged in the housing or the energy storage body.

In another aspect, the embodiments of the present application further provide an energy storage system applied to a wind turbine, wherein the energy storage system includes: a converter electrically connected to a generator and a transformer of the wind turbine; and the above energy storage device, wherein the conduction component of the energy storage device is electrically connected to the converter.

In another aspect, the embodiments of the present application further provide an energy storage method applied to the above energy storage system, including: determining whether the converter requires additional power consumption; under a condition that the converter requires additional power consumption, turning on a switch between the conduction component and the converter through the controller, so that the energy storage device is electrically connected to the converter; under a condition that the converter does not require additional power consumption, turning off the switch between the conduction component and the converter through the controller, so that the energy storage device is kept disconnected from the converter. According to the aspect of the present application, after turning on the switch between the conduction component and the converter through the controller, so that the energy storage device is electrically connected to the converter, the method further includes: obtaining a temperature of the energy storage device and comparing the temperature to an allowable temperature threshold of the energy storage device; starting, under a condition that the temperature is greater than the allowable temperature threshold, a cooling fan of the energy storage device through the controller.

In another aspect, the embodiments of the present application further provide a wind turbine including the above energy storage system.

According to the energy storage device, the energy storage system, the energy storage method, and the wind turbine provided by the present application, the extra energy of the external energy device may be rapidly consumed by the heat storage component arranged in the housing and may be stored in the form of thermal energy, which has the advantages of simple structure, energy conservation and environmental protection. Applying the energy storage device to the wind turbine can effectively save and utilize energy, reduce the self-consumption of the wind turbine, and facilitate to adjust the power generation of the wind turbine.

### BRIEF DESCRIPTION OF THE DRAWINGS

The present application will be better understood from the following detailed description of non-limiting embodiments of the present application with reference to the accompanying drawings. Further, Other features, objects, and advantages of the present application will become more apparent from the following detailed description of non-limiting embodiments with reference to the accompanying drawings, in which like or similar reference numerals indicate like or similar features.
Fig. 1 is a schematic structural diagram of an energy storage device provided by an embodiment of the present application;
Fig. 2 is a cross-sectional schematic structural diagram of the energy storage device shown in Fig. 1;
Fig. 3 is a schematic structural diagram of a heat storage component of the energy storage device shown in Fig. 1;
Fig. 4 is a schematic structural diagram of an energy storage sub-module of the heat storage component shown in Fig. 3;
Fig. 5 is a schematic structural diagram of an energy storage body of the heat storage component shown in Fig. 3 along a first direction;
Fig. 6 is a schematic structural diagram of the energy storage body of the heat storage component shown in Fig. 3 along a second direction;
Fig. 7 is a structural block diagram of an energy storage system for a wind turbine provided by an embodiment of the present application;
Fig. 8 is a flow chart of an energy storage method for a wind turbine provided by an embodiment of the present application.

Description of reference numbers:
1-energy storage device; 2-converter; 3-generator; 4-transformer; X-first direction; Y-second direction;
10-housing; 10a-accommodating cavity; 11-first wall; 111-air outlet; 12-second wall; 13-third wall; 14-fourth wall;
20-heat storage component; 21-energy storage body; 21a-energy storage sub-module; 211a-first prefabricated recess; 211b-second prefabricated recess; 211-heat transfer via; 22-conduction component; 212-ventilation channel; 23-base; 24-pressing device; 241-pressing cover; 242-fastener; 25-switch;
30-cooling fan.

### DETAILED DESCRIPTION

The features and exemplary embodiments of various aspects of the present application will be described in detail below. In the following detailed description, numerous specific details are set forth in order to provide a thorough understanding of the present application. However, it will be apparent to those skilled in the art that the present application may be practiced without some of these specific details. The following description of the embodiments is merely intended to provide a better understanding of the present application by illustrating examples of the present application. The present application is by no means limited to any specific configuration and algorithm proposed below, but covers any modification, replacement and improvement of elements, components and algorithms without departing from the scope of the present application. In the drawings and the following description, at least some of the well-known structures and techniques are not shown in order to avoid unnecessarily obscuring the present application.

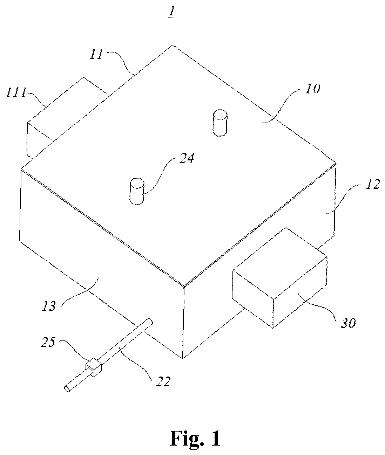

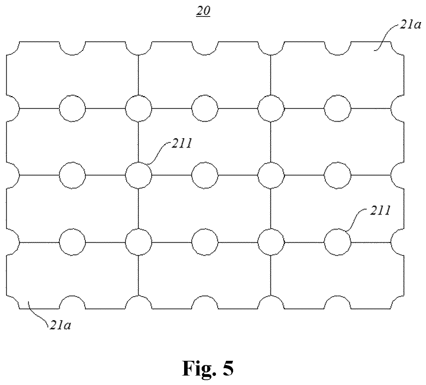

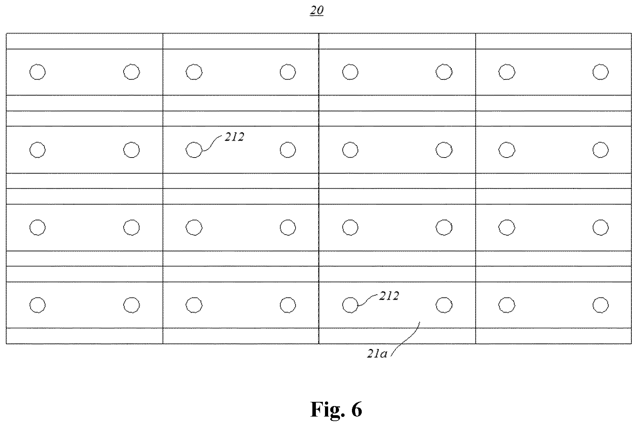

In order to provide a better understanding of the present application, the energy storage device, the energy storage system, the energy storage method, and the wind turbine provided by the embodiments of the present application will be described in detail below with reference to Fig. 1 to Fig. 8.

Please refer to Figs. 1 to 3 together. The embodiments of the present application provide an energy storage device 1 including a housing 10 and a heat storage component 20.

The housing 10 has an accommodating cavity 10a formed by a wall component. The heat storage component 20 is arranged in the accommodating cavity 10a. The heat storage component 20 includes an energy storage body 21 and a conduction component 22. The energy storage body 21 is provided with a plurality of heat transfer channels 211 penetrating through the energy storage body 21 along a first direction X. The conduction component 22 is accommodated in the plurality of heat transfer channels 211. One end of the conduction component 22 protrudes from the wall component, so as to be electrically connected with an external energy device.

Optionally, the energy storage body 21 is an integral cuboid structural component. The conduction component 22 may be a conductive material such as a resistance wire or an electric heating rod that can convert electricity into thermal energy for heating the energy storage body 21.

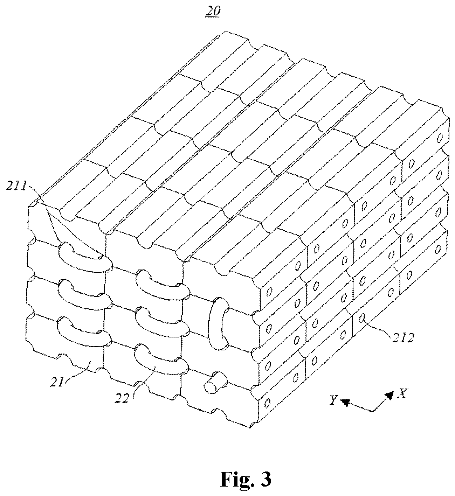

Optionally, the conduction component 22 is an entire resistance wire continuously accommodated in the plurality of heat transfer channels 211. As shown in Fig. 3, the entire resistance wire is wound back and forth in each heat transfer channel 211, so as to place a longer resistance wire in a narrow space. Optionally, the conduction component 22 is a plurality of resistance wires or a plurality of electric heating rods accommodated in the plurality of heat transfer channels 211, and the plurality of resistance wires or the plurality of electric heating rods are connected end to end in sequence. In addition, the outer diameter of the conduction component 22 is slightly smaller than the inner diameter of the heat transfer channels 211, which facilitates the installation of the conduction component 22 in the heat transfer channels 211.

The external energy device can be, for example, a converter of a wind turbine. One end of the conduction component 22 protrudes from the wall component and is electrically connected to the converter, and the other end of the conduction component 22 is connected to the energy storage body 21. When the current passes through the conduction component 22, the conduction component 22 can generate heat. Therefore, the excess electric energy of the converter can be quickly consumed, and the excess electric energy can be stored in the energy storage body 21 in the form of thermal energy, which can not only reduce the influence of the voltage peak of the external energy device on the electrical components, but also effectively save and utilize energy.

According to the energy storage device provided by the present application, the extra energy of the external energy device may be rapidly consumed by the heat storage component arranged in the housing and may be stored in the form of thermal energy, which has the advantages of simple structure, energy conservation and environmental protection.

Please refer to Figs. 1 to 3 again. The energy storage body 21 of the heat storage component 20 may be a cuboid structural component made of magnesium or an alloy containing magnesium, which has high specific heat and high temperature resistance. The highest heat storage temperature thereof may be up to 800°C, and the density thereof may be only about 1/3 of steel, which is easy to process.

When the energy stored by the energy storage device exceeds its own carrying capacity, for example, when the temperature of the energy storage body 21 exceeds the allowable maximum temperature of 800°C, the energy storage device needs to be dissipated in time.

Specifically, the energy storage body 21 is further provided with ventilation channels 212 penetrating through the energy storage body 21 along a second direction Y, and the second direction Y intersects the first direction X. The ventilation channels 212 and the heat transfer channels 211 are separated from each other to avoid the short circuit phenomenon of airflow during the heat exchange process, which improves the heat dissipation effect of the energy storage device. Preferably, the second direction Y and the first direction X are perpendicular to each other, which is convenient for processing the energy storage body 21.

In order to further improve the heat dissipation effect of the energy storage device, the energy storage device provided by the present application further includes a cooling fan 30. The wall component of the housing 10 includes a first wall 11 and a second wall 12 oppositely arranged along the second direction Y The first wall 11 is provided with an air outlet 111, and the air outlet 111 is provided with a pipeline for communicating with an external device. The cooling fan 30 is arranged on the second wall 12 and is arranged corresponding to the ventilation channels 212. Further, the cooling fan 30 is arranged opposite to the air outlet 111, which can avoid the turning of the airflow channel and improve the heat dissipation effect.

The cooling fan 30 includes a motor and blades connected to the motor. Through the blades, the cold air from the outside can be introduced into the energy storage body 21 through the ventilation channels 212, so as to quickly and timely cool the energy storage body 21 with excessive temperature and dissipate heat to prevent energy storage body 21 from damage such as cracks due to overheating. In addition, since the ventilation channels 212 and the heat transfer channels 211 are separated from each other, the cold air from the outside will not directly contact the conduction component 22. Therefore, the accelerated oxidation of the conduction component 22 such as a resistance wire may be avoided, which is beneficial to prolong the service life of the conduction component 22.

In addition, the air outlet 111 is provided with a pipeline for communicating with an external device. The external device can be a device in the wind turbine, for example, an electric control cabinet that needs to be dehumidified, a hydraulic station that needs to heat hydraulic oil in winter, and a device that needs to heat lubricating oil. The consumed energy can be further stored in the form of thermal energy, and released when needed to dehumidify the electric control cabinet, increase the temperature of the engine room in winter, thereby achieving the purpose of reducing the self-consumption of the wind turbine.

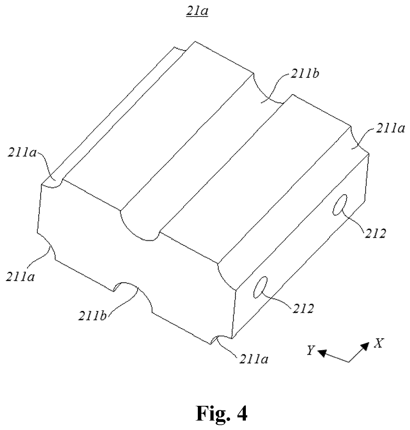

Further, the air outlet 111 of the housing 10 is provided with a self-hanging ventilation curtain, and the commonly used self-hanging ventilation curtain can be a louver to form a normally closed channel. When the energy storage device needs to store energy, the cooling fan 30 and the self-hanging ventilation curtain at the air outlet 111 are closed to minimize the heat exchange between the energy storage body 21 and the outside world. If excess heat energy needs to be consumed, the excess heat energy can be transferred to the external device through the pipeline at the air outlet 111. When the energy stored by the energy storage device reaches its carrying capacity and cannot be quickly consumed in time, the self-hanging ventilation curtain of the air outlet 111 can be opened, and the cooling fan 30 can dissipate heat in time, thereby improving the flexibility of the temperature adjustment of the energy storage device. Please refer to Figs. 4 to 6 together. As an optional embodiment, the energy storage body 21 includes a plurality of energy storage sub-modules 21a spliced with each other. Further, optionally, each energy storage sub-module 21a is a cuboid structural component.

In some embodiments, each energy storage sub-module 21a is provided with a heat transfer channel 211 penetrating through the energy storage sub-module 21a along the first direction X. When the conduction component 22 is an entire resistance wire, the entire resistance wire is wound back and forth in the heat transfer channels 211 of the energy storage sub-modules 21a. When the conduction component 22 is a plurality of resistance wires or a plurality of electric heating rods, the plurality of resistance wires or the plurality of electric heating rods are sequentially connected and accommodated in the heat transfer channels 211 of the plurality of energy storage sub-modules 21a.

In some embodiments, a heat transfer channel 211 extending along the first direction X is formed between at least two adjacent energy storage sub-modules 21a. When the conduction component 22 is an entire resistance wire, the entire resistance wire is wound back and forth in a plurality of heat transfer channels 211 formed between the energy storage sub-modules 21a. When the conduction component 22 is a plurality of resistance wires or a plurality of electric heating rods, the plurality of resistance wires or the plurality of electric heating rods are sequentially connected and accommodated in the plurality of heat transfer channels 211 formed between the plurality of energy storage sub-modules 21a.

Specifically, each energy storage sub-module 21a includes first prefabricated recesses 211a penetrating through the energy storage sub-module 21a along the first direction X, the first prefabricated recesses 211a are located at corners of the energy storage sub-module 21a, and the first prefabricated recesses 211a of the adjacent energy storage sub-modules 21a together form a heat transfer channel 211. Optionally, when the energy storage sub-module 21a is a cuboid structural component, the first prefabricated recesses 211a are located at four corners of the energy storage sub-module 21a, and the first prefabricated recesses 211a of four adjacent energy storage sub-modules 21a together form a heat transfer channel 211.

Optionally, each energy storage sub-module 21a includes second prefabricated recesses 211b penetrating through the energy storage sub-module 21a along the first direction X, the second prefabricated recesses 211b are located on the surfaces of the energy storage sub-module 21a, and the second prefabricated recesses 211b of two adjacent energy storage sub-modules 21a together form a heat transfer channel 211. Optionally, when the energy storage sub-module 21a is a cuboid structural component, the second prefabricated recesses 211b are located on at least two surfaces of the energy storage sub-module 21a, and the second prefabricated recesses 211b of two adjacent energy storage sub-modules 21a together form a heat transfer channel 211. As an optional embodiment, the first prefabricated recesses 211a are respectively arranged at multiple corners of each energy storage sub-module 21a, and the second prefabricated recesses 211b are respectively arranged on multiple surfaces of each energy storage sub-module 21a. In this way, more heat transfer channels 211 can be formed between the plurality of energy storage sub-modules 21a spliced with each other, which increases the distribution density of the conduction component 22 in the energy storage body 21 and further improves the thermal conduction efficiency of the heat storage component 20.

Further, each energy storage sub-module 21a further includes ventilation channels 212 penetrating through the energy storage sub-module 21a along the second direction Y, and the ventilation channels 212 are separated from the first prefabricated recesses 211a and the second prefabricated recesses 211b.

As shown in Figs. 3 and 4, the energy storage body 21 includes forty-eight energy storage sub-modules 21a spliced with each other, and each sub-energy storage module 21a is a cuboid structural component. The forty-eight energy storage sub-modules 21a are spliced into a cubic structure having four layers, and each layer has three rows and four columns of the energy storage sub-modules 21a. The four corners of each energy storage sub-module 21a are respectively provided with a first prefabricated recess 211a penetrating through the energy storage sub-module 21a along the first direction X, and the first prefabricated recesses 211a of the forty-eight energy storage sub-modules 21a form six heat transfer channels 211. In addition, the upper and lower edges of each energy storage sub-module 21a are respectively provided with a second prefabricated recess 211b penetrating through the energy storage sub-module 21a along the first direction X, and the second prefabricated recesses 211b of the forty-eight energy storage sub-modules 21a form nine heat transfer channels 211. The entire conduction component 22 is wound back and forth in the fifteen heat transfer channels 211 formed by the first prefabricated recesses 211a and the second prefabricated recesses 211b.

In addition, each energy storage sub-module 21a further includes two ventilation channels 212 penetrating through the energy storage sub-module 21a along the second direction Y. The two ventilation channels 212 are separated from the first prefabricated recesses 211a and the second prefabricated recesses 211b, and the forty-eight energy storage sub-modules 21a form thirty-two ventilation channels 212.

As a result, the plurality of energy storage sub-modules 21a have a cube shape after being spliced with each other. Therefore, the plurality of first prefabricated recesses 211a and the plurality of second prefabricated recesses 211b can be spliced with each other to form the plurality of heat transfer channels 211 of the energy storage body 21, thereby accommodating the conduction component 22. Meanwhile, the cooling fan 30 is arranged corresponding to the ends of the plurality of ventilation channels 212 to improve the heat dissipation effect of the energy storage device. The plurality of energy storage sub-modules 21a of modular design can be arbitrarily spliced into energy storage bodies 21 of different sizes and volumes according to usage requirements. The number of the energy storage sub-modules 21a or the total volume of the single energy storage body 21 is proportional to the total length of the conduction component 22. The length of the conduction component 22 is proportional to the power consumption capacity, and more energy storage sub-modules 21a mean that more heat can be stored. The expansion may be convenient, and the versatility and flexibility of the energy storage sub-modules 21a may be improved, which can meet the requirements of wind farm level energy storage and facilitate inventory management.

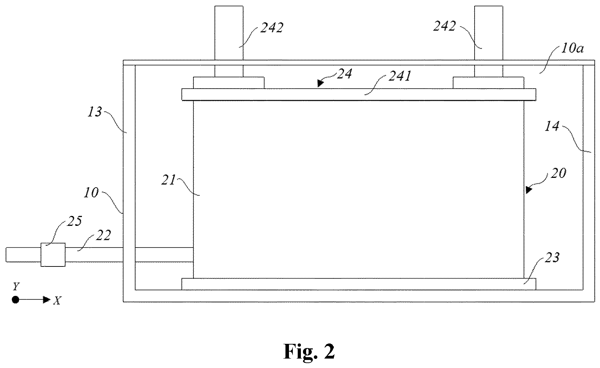

Referring to Fig. 2 again, the heat storage component 20 further includes a base 23 for supporting the energy storage body 21. The base 23 mainly plays the role of electric insulation and heat insulation. For example, the material of the base 23 may be high temperature resistant nylon and other plastic. Further, the base 23 may be a metal plate wrapped with a high temperature resistant layer such as nylon. The energy storage body 21 and the base 23 in the heat storage component 20 are firmly connected as a whole through a pressing device 24, and are fixed to the wall component of the housing 10. Therefore, the heat storage component 20 may be prevented from moving in the housing 10 due to bumps or vibrations, and the energy storage body 21 may be prevented from being damaged.

Specifically, the pressing device 24 includes a pressing cover 241 and fasteners 242 arranged on the pressing cover 241, the pressing cover 241 is pressed against the energy storage body 21, and the fasteners are fixedly connected to the wall component of the housing 10. The fasteners 242 can be bolts with external threads, and the wall component of the housing 10 is provided with internal threaded holes. Through the threaded connection between the fasteners 242 and the internal threaded holes of the wall component, the distance between the housing 10 and the heat storage component 20 may be adjusted, thereby pressing or loosening the heat storage component 20.

Further, the wall component of the housing 10 further includes a third wall 13 and a fourth wall 14 oppositely arranged along the first direction X, and the one end of the conduction component 22 protrudes from the third wall 13. Predetermined gaps are respectively maintained between the energy storage body 21 and the third wall 13 and between the energy storage body 21 and the fourth wall 14. The predetermined gaps may be, for example, 200 mm to allow air to flow inside the housing 10, and prevent the failure of the conduction component 22 from causing the housing 10 to be energized.

As mentioned above, the material of the housing 10 is preferably a metal material, which has a certain structural strength. Optionally, the outer surface of the housing 10 is provided with a thermal insulation layer to minimize heat transfer between the interior and the exterior of the housing 10. The material of the thermal insulation layer is usually non-metallic foam, which can also have an electric insulation effect.

In addition, the energy storage device 1 further includes a temperature monitoring device (not shown in the figure) and a controller (not shown in the figure) electrically connected to the temperature monitoring device. The temperature monitoring device can be arranged in the housing 10 or the energy storage body 21, thereby monitoring the temperature of the energy storage body 21 in real time. According to the monitored temperature, the cooling fan 30 may be activated or deactivated by the controller, so as to realize automatic control.

In order to control the energy storage device 1 more effectively, a switch 25 is arranged between the conduction component 22 of the heat storage component 20 and the external energy device. The switch 25 can cut off the transmission of electric energy through the controller, and the conduction component 22 may only generate heat when necessary. Therefore, the startup and shutdown of the energy storage device 1 may be controlled based on whether the external energy device requires additional power consumption.

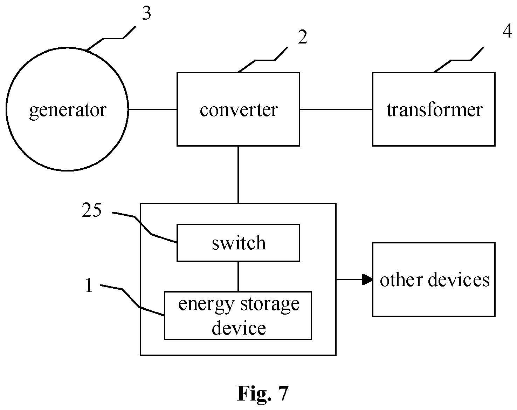

Referring to Fig. 7, the embodiments of the present application further provide an energy storage system applied to a wind turbine. The energy storage system includes the energy storage device 1 described above and a converter 2. The conduction component 22 of the energy storage device 1 is electrically connected to the converter 2.

As an important component of the wind turbine, the converter 2 plays a crucial role in the operation of the wind turbine. Under a condition that the wind turbine is working normally, the uncertainty of the wind condition may cause the voltage fluctuation of the generator 3, which in turn may cause damage to the surge protector on the generator 3 and other components.

Optionally, the energy storage device 1 is placed adjacent to a power element of the converter 2, such as a rectifier and/or an inverter. One end of the conduction component 22 of the energy storage device 1 protrudes from the wall component and is electrically connected to the converter 2, and the other end of the conduction component 22 is connected to the energy storage body 21. The excess electric energy of the converter can be quickly consumed, and the excess electric energy can be stored in the energy storage body 21 in the form of thermal energy, which can not only reduce the influence of the voltage peak on the surge protector and other components, but also effectively save energy and facilitate to adjust the power generation of the wind turbine.

According to the energy storage system provided by the present application, applying the above energy storage device 1 can effectively save and utilize energy, reduce the self-consumption of the wind turbine, and facilitate to adjust the power generation of the wind turbine.

In addition, the embodiments of the present application further provide a wind turbine including the above energy storage system.

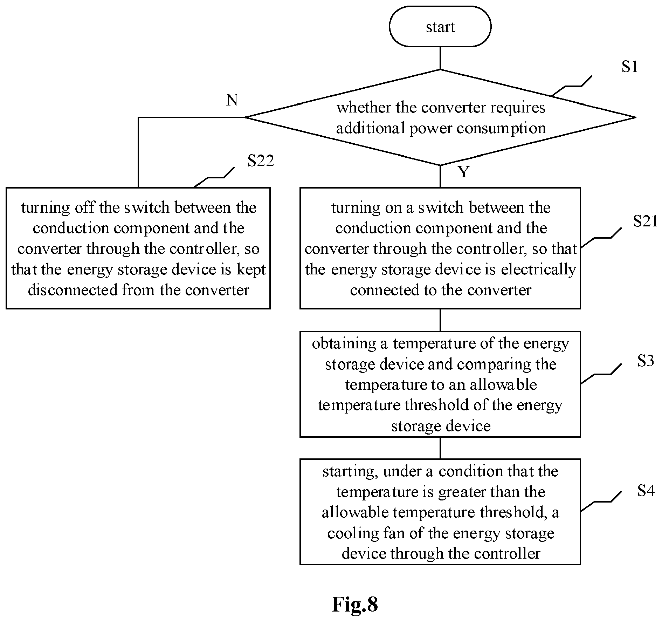

Referring to Fig. 8, the embodiments of the present application further provide an energy storage method applied to the above energy storage system. The energy storage method mainly includes two control parts: one part is energy being stored as heat, and the other part is heat consumption.

Specifically, the energy storage method includes steps S1, S21 and S22.

Step S1: determining whether the converter 2 requires additional power consumption. The information whether the converter 2 requires additional power consumption can be obtained from the control system of the wind turbine. For example, the power generation voltage of the generator 3 is too high due to a sudden change of the wind condition, or the wind turbine needs to consume a lot of useless power for low voltage crossing.

Step S21: under a condition that the converter 2 requires additional power consumption, turning on a switch 25 between the conduction component 22 and the converter 2 through the controller, so that the energy storage device 1 is electrically connected to the converter 2. The energy storage device 1 is connected as an electrical device for power consumption.

Step S22: under a condition that the converter 2 does not require additional power consumption, turning off the switch 25 between the conduction component 22 and the converter 2 through the controller, so that the energy storage device 1 is kept disconnected from the converter 2.

The energy storage device 1 is kept disconnected, and does not have a connection relationship with the power generation system of the wind turbine.

Further, after the step S21 of turning on the switch 25 between the conduction component 22 and the converter 2 through the controller, so that the energy storage device 1 is electrically connected to the converter 2, the energy storage method further includes steps S3 and S4. Step S3: obtaining a temperature of the energy storage device 1 and comparing the temperature to an allowable temperature threshold of the energy storage device 1.

Step S4: starting, under a condition that the temperature is greater than the allowable temperature threshold, a cooling fan 30 of the energy storage device 1 through the controller. If the temperature is not greater than the allowable temperature threshold, the stored heat can be used according to actual demand. For example, the electric energy may be stored as heat energy at night when the power demand is low, so as to provide heating for residents in winter, or to provide services for production processes requiring heating in nearby factories. According to the energy storage method of the energy storage system provided by the present application, when the additional energy generated by the converter 2 needs to be consumed, the energy storage device 1 can quickly consume the energy generated by the converter 2. At the same time, the consumed energy can be stored, and can be used in the form of thermal energy when needed, thereby effectively saving and utilizing energy.

Those skilled in the art will understand that all the above embodiments are exemplary and non-limiting. Different technical features in different embodiments may be combined to achieve beneficial results. Those skilled in the art should be able to understand and implement other varied embodiments of the disclosed ones by studying the drawings, the specification and the claims. In the claims, the term "comprise" does not exclude other devices and steps; objects without the use of quantifiers are intended to include one or more objects and can be used interchangeably with "one or more objects"; the terms "first", "second" are used to indicate a name rather than to specify any particular order. Any reference numerical in the claims should not be construed as limiting the scope of protection. Functions of a plurality of parts in the claims may be implemented by a single hardware or software module. The presence of certain technical features in different dependent claims does not imply that these technical features cannot be combined to achieve beneficial results.

## Claims

1. An energy storage device (1), comprising:
a housing (10) having an accommodating cavity (10a) formed by a wall component;
a heat storage component (20) arranged in the accommodating cavity (10a), wherein the heat storage component (20) comprises an energy storage body (21) and a conduction component (22), the energy storage body (21) is provided with a plurality of heat transfer channels (211) penetrating through the energy storage body (21) along a first direction (X), the conduction component (22) is accommodated in the plurality of heat transfer channels (211), and one end of the conduction component (22) protrudes from the wall component, so as to be electrically connected with an external energy device,
**characterized in that**
the energy storage body (21) is further provided with ventilation channels (212) penetrating through the energy storage body (21) along a second direction (Y), the ventilation channels (212) and the heat transfer channels (211) are separated from each other, and the second direction (Y) intersects the first direction (X).

2. The energy storage device (1) according to claim 1, wherein the energy storage body (21) is a cuboid structural component made of magnesium or an alloy containing magnesium.

3. The energy storage device (1) according to claim 1, wherein the energy storage body (21) comprises a plurality of energy storage sub-modules (21a) spliced with each other, and each energy storage sub-module (21a) is provided with a heat transfer channel (211) penetrating through the energy storage sub-module (21a) along the first direction (X).

4. The energy storage device (1) according to claim 1, wherein the energy storage body (21) comprises a plurality of energy storage sub-modules (21a) spliced with each other, each energy storage sub-module (21a) is a cuboid structural component, and a heat transfer channel (211) extending along the first direction (X) is formed between at least two adjacent energy storage sub-modules (21a).

5. The energy storage device (1) according to claim 4, wherein each energy storage sub-module (21a) comprises first prefabricated recesses (211a) penetrating through the energy storage sub-module (21a) along the first direction (X), the first prefabricated recesses (211a) are located at four corners of the energy storage sub-module (21a), and the first prefabricated recesses (211a) of four adjacent energy storage sub-modules (21a) together form a heat transfer channel (211).

6. The energy storage device (1) according to claim 4, wherein each energy storage sub-module (21a) comprises second prefabricated recesses (211b) penetrating through the energy storage sub-module (21a) along the first direction (X), the second prefabricated recesses (211b) are located on at least two surfaces of the energy storage sub-module (21a), and the second prefabricated recesses (211b) of two adjacent energy storage sub-modules (21a) together form a heat transfer channel (211).

7. The energy storage device (1) according to claim 1, wherein the conduction component (22) is an entire resistance wire continuously accommodated in the plurality of heat transfer channels (211).

8. The energy storage device (1) according to claim 1, wherein the conduction component (22) is a plurality of resistance wires or a plurality of electric heating rods accommodated in the plurality of heat transfer channels (211), and the plurality of resistance wires or the plurality of electric heating rods are connected end to end in sequence.

9. The energy storage device (1) according to claim 1, wherein the energy storage device (1) further comprises a cooling fan (30), the wall component of the housing (10) comprises a first wall (11) and a second wall (12) oppositely arranged along the second direction (Y), the first wall (11) is provided with an air outlet (111), the air outlet (111) is provided with a pipeline for communicating with an external device, and the cooling fan (30) is arranged on the second wall (12) and is arranged corresponding to the ventilation channels (212).

10. The energy storage device (1) according to claim 9, wherein the air outlet (111) of the housing (10) is provided with a self-hanging ventilation curtain.

11. The energy storage device (1) according to claim 9, wherein the wall component of the housing (10) further comprises a third wall (13) and a fourth wall (14) oppositely arranged along the first direction (X), the one end of the conduction component (22) protrudes from the third wall (13), and predetermined gaps are respectively maintained between the energy storage body (21) and the third wall (13) and between the energy storage body (21) and the fourth wall (14).

12. The energy storage device (1) according to claim 1, wherein an outer surface of the housing (10) is provided with a thermal insulation layer.

13. The energy storage device (1) according to claim 1, wherein the heat storage component (20) further comprises a base (23) for supporting the energy storage body (21), and the energy storage body (21) and the base (23) in the heat storage component (20) are firmly connected as a whole through a pressing device (24) and fixed to the wall component of the housing (10).

14. The energy storage device (1) according to claim 13, wherein the pressing device (24) comprises a pressing cover (241) and a fastener (242) arranged on the pressing cover (241), the pressing cover (241) is pressed against the energy storage body (21), and the fastener (242) is fixedly connected to the wall component of the housing (10).

15. The energy storage device (1) according to claim 1, wherein the energy storage device (1) further comprises a temperature monitoring device and a controller electrically connected to the temperature monitoring device, and the temperature monitoring device is arranged in the housing (10) or the energy storage body (21).

16. An energy storage system applied to a wind turbine, wherein the energy storage system comprises:
a converter (2); and
the energy storage device (1) according to any one of claims 1 to 15, wherein the conduction component (22) of the energy storage device (1) is electrically connected to the converter (2).

17. An energy storage method applied to the energy storage system according to claim 16, comprising:
determining (S 1) whether the converter (2) requires additional power consumption;
under a condition that the converter (2) requires additional power consumption, turning (S21) on a switch (25) between the conduction component (22) and the converter (2) through the controller, so that the energy storage device (1) is electrically connected to the converter (2);
under a condition that the converter (2) does not require additional power consumption, turning (S22) off the switch (25) between the conduction component (22) and the converter (2) through the controller, so that the energy storage device (1) is kept disconnected from the converter (2).

18. The energy storage method according to claim 17, wherein after turning (S21) on the switch (25) between the conduction component (22) and the converter (2) through the controller, so that the energy storage device (1) is electrically connected to the converter (2), the method further comprises:
obtaining (S3) a temperature of the energy storage device (1) and comparing the temperature to an allowable temperature threshold of the energy storage device (1);
starting (S4), under a condition that the temperature is greater than the allowable temperature threshold, a cooling fan (30) of the energy storage device (1) through the controller.

19. A wind turbine comprising the energy storage system according to claim 16.

## Patentansprüche

1. Energiespeichervorrichtung (1), die Folgendes umfasst:
ein Gehäuse (10), das einen Aufnahmehohlraum (10a) aufweist, der durch eine Wandkomponente gebildet wird;
eine Wärmespeicherkomponente (20), die in dem Aufnahmehohlraum (10a) angeordnet ist, wobei die Wärmespeicherkomponente (20) einen Energiespeicherkörper (21) und eine Leitungskomponente (22) umfasst, wobei der Energiespeicherkörper (21) mit einer Vielzahl von Wärmeübertragungskanälen (211) versehen ist, die den Energiespeicherkörper (21) entlang einer ersten Richtung (X) durchdringen, die Leitungskomponente (22) in der Vielzahl von Wärmeübertragungskanälen (211) untergebracht ist und ein Ende der Leitungskomponente (22) aus der Wandkomponente herausragt, um mit einer externen Energievorrichtung elektrisch verbunden zu werden,
**dadurch gekennzeichnet, dass** der Energiespeicherkörper (21) ferner mit Belüftungskanälen (212) versehen ist, die den Energiespeicherkörper (21) entlang einer zweiten Richtung (Y) durchdringen, wobei die Belüftungskanäle (212) und die Wärmeübertragungskanäle (211) voneinander getrennt sind und die zweite Richtung (Y) die erste Richtung (X) schneidet.

2. Energiespeichervorrichtung (1) nach Anspruch 1, wobei der Energiespeicherkörper (21) ein quaderförmiges Bauteil aus Magnesium oder einer magnesiumhaltigen Legierung ist.

3. Energiespeichervorrichtung (1) nach Anspruch 1, wobei der Energiespeicherkörper (21) eine Vielzahl von Energiespeicher-Untermodulen (21a) umfasst, die miteinander verbunden sind, und jedes Energiespeicher-Untermodul (21a) mit einem Wärmeübertragungskanal (211) versehen ist, der das Energiespeicher-Untermodul (21a) entlang der ersten Richtung (X) durchdringt.

4. Energiespeichervorrichtung (1) nach Anspruch 1, wobei der Energiespeicherkörper (21) eine Vielzahl von miteinander verbundenen Energiespeicher-Untermodulen (21a) umfasst, jedes Energiespeicher-Untermodul (21a) ein quaderförmiges Bauteil ist, und zwischen mindestens zwei benachbarten Energiespeicher-Untermodulen (21a) ein sich entlang der ersten Richtung (X) erstreckender Wärmeübertragungskanal (211) ausgebildet ist.

5. Energiespeichervorrichtung (1) nach Anspruch 4, wobei jedes Energiespeicher-Untermodul (21a) erste vorgefertigte Aussparungen (211a) aufweist, die das Energiespeicher-Untermodul (21a) entlang der ersten Richtung (X) durchdringen, die ersten vorgefertigten Aussparungen (211a) an vier Ecken des Energiespeicher-Untermoduls (21a) angeordnet sind und die ersten vorgefertigten Aussparungen (211a) von vier benachbarten Energiespeicher-Untermodulen (21a) zusammen einen Wärmeübertragungskanal (211) bilden.

6. Energiespeichervorrichtung (1) nach Anspruch 4, wobei jedes Energiespeicher-Untermodul (21a) zweite vorgefertigte Aussparungen (211b) aufweist, die das Energiespeicher-Untermodul (21a) entlang der ersten Richtung (X) durchdringen, die zweiten vorgefertigten Aussparungen (211b) auf mindestens zwei Oberflächen des Energiespeicher-Untermoduls (21a) angeordnet sind, und die zweiten vorgefertigten Aussparungen (211b) zweier benachbarter Energiespeicher-Untermodule (21a) zusammen einen Wärmeübertragungskanal (211) bilden.

7. Energiespeichervorrichtung (1) nach Anspruch 1, wobei die Leitungskomponente (22) ein ganzer Widerstandsdraht ist, der kontinuierlich in der Vielzahl von Wärmeübertragungskanälen (211) untergebracht ist.

8. Energiespeichervorrichtung (1) nach Anspruch 1, wobei die Leitungskomponente (22) eine Vielzahl von Widerstandsdrähten oder eine Vielzahl von elektrischen Heizstäben ist, die in der Vielzahl von Wärmeübertragungskanälen (211) untergebracht sind, und die Vielzahl von Widerstandsdrähten oder die Vielzahl von elektrischen Heizstäben Ende an Ende aufeinanderfolgend verbunden sind.

9. Energiespeichervorrichtung (1) nach Anspruch 1, wobei die Energiespeichervorrichtung (1) ferner ein Kühlgebläse (30) umfasst, die Wandkomponente des Gehäuses (10) eine erste Wand (11) und eine zweite Wand (12) umfasst, die entlang der zweiten Richtung (Y) gegenüberliegend angeordnet sind, die erste Wand (11) mit einem Luftauslass (111) versehen ist, der Luftauslass (111) mit einer Rohrleitung zur Kommunikation mit einer externen Vorrichtung versehen ist, und das Kühlgebläse (30) an der zweiten Wand (12) angeordnet ist und entsprechend den Lüftungskanälen (212) angeordnet ist.

10. Energiespeichervorrichtung (1) nach Anspruch 9, wobei der Luftauslass (111) des Gehäuses (10) mit einem selbsthängenden Lüftungsvorhang versehen ist.

11. Energiespeichervorrichtung (1) nach Anspruch 9, wobei die Wandkomponente des Gehäuses (10) ferner eine dritte Wand (13) und eine vierte Wand (14) aufweist, die entlang der ersten Richtung (X) gegenüberliegend angeordnet sind, das eine Ende der Leitungskomponente (22) aus der dritten Wand (13) herausragt und zwischen dem Energiespeicherkörper (21) und der dritten Wand (13) bzw. zwischen dem Energiespeicherkörper (21) und der vierten Wand (14) vorgegebene Abstände eingehalten werden.

12. Energiespeichervorrichtung (1) nach Anspruch 1, wobei eine Außenfläche des Gehäuses (10) mit einer Wärmeisolierschicht versehen ist.

13. Energiespeichervorrichtung (1) nach Anspruch 1, wobei die Wärmespeicherkomponente (20) ferner eine Basis (23) zur Abstützung des Energiespeicherkörpers (21) aufweist und der Energiespeicherkörper (21) und die Basis (23) in der Wärmespeicherkomponente (20) als Ganzes durch eine Pressvorrichtung (24) fest verbunden und an der Wandkomponente des Gehäuses (10) befestigt sind.

14. Energiespeichervorrichtung (1) nach Anspruch 13, wobei die Pressvorrichtung (24) eine Pressabdeckung (241) und ein an der Pressabdeckung (241) angeordnetes Befestigungselement (242) umfasst, die Pressabdeckung (241) gegen den Energiespeicherkörper (21) gepresst wird und das Befestigungselement (242) fest mit der Wandkomponente des Gehäuses (10) verbunden ist.

15. Energiespeichervorrichtung (1) nach Anspruch 1, wobei die Energiespeichervorrichtung (1) ferner eine Temperaturüberwachungsvorrichtung und eine mit der Temperaturüberwachungsvorrichtung elektrisch verbundene Steuerung umfasst und die Temperaturüberwachungsvorrichtung im Gehäuse (10) oder im Energiespeicherkörper (21) angeordnet ist.

16. Energiespeichersystem, angewandt auf eine Windturbine, wobei das Energiespeichersystem Folgendes umfasst:
einen Konverter (2) und
die Energiespeichervorrichtung (1) nach einem der Ansprüche 1 bis 15, wobei die Leitungskomponente (22) der Energiespeichervorrichtung (1) elektrisch mit dem Konverter (2) verbunden ist.

17. Verfahren zur Energiespeicherung, angewandt auf das Energiespeichersystem nach Anspruch 16, umfassend:
Bestimmen (S1), ob der Konverter (2) eine zusätzliche Leistungsaufnahme benötigt;
unter der Bedingung, dass der Konverter (2) eine zusätzliche Leistungsaufnahme benötigt, das Einschalten (S21) eines Schalters (25) zwischen der Leitungskomponente (22) und dem Konverter (2) durch die Steuerung, so dass die Energiespeichervorrichtung (1) elektrisch mit dem Konverter (2) verbunden ist;
unter der Bedingung, dass der Konverter (2) keine zusätzliche Leistungsaufnahme benötigt, Ausschalten (S22) des Schalters (25) zwischen der Leitungskomponente (22) und dem Konverter (2) durch die Steuerung, so dass die Energiespeichervorrichtung (1) vom Konverter (2) getrennt bleibt.

18. Verfahren zur Energiespeicherung nach Anspruch 17, wobei nach dem Einschalten (S21) des Schalters (25) zwischen der Leitungskomponente (22) und dem Konverter (2) durch die Steuerung, so dass die Energiespeichervorrichtung (1) elektrisch mit dem Konverter (2) verbunden ist, das Verfahren ferner umfasst:
Erhalten (S3) einer Temperatur der Energiespeichervorrichtung (1) und Vergleichen der Temperatur mit einem zulässigen Temperaturschwellenwert der Energiespeichervorrichtung (1),
Starten (S4) eines Kühlgebläses (30) der Energiespeichervorrichtung (1) durch die Steuerung, wenn die Temperatur über dem zulässigen Temperaturschwellenwert liegt.

19. Windturbine, umfassend das Energiespeichersystem nach Anspruch 16.

## Revendications

1. Dispositif de stockage d'énergie (1), comprenant :
un boîtier (10) comportant une cavité de logement (10a) formée par un composant de paroi ;
un composant de stockage de chaleur (20) disposé dans la cavité de logement (10a), dans lequel le composant de stockage de chaleur (20) comprend un corps de stockage d'énergie (21) et un composant de conduction (22), le corps de stockage d'énergie (21) étant pourvu d'une pluralité de canaux de transfert de chaleur (211) pénétrant à travers le corps de stockage d'énergie (21) le long d'une première direction (X), le composant de conduction (22) étant logé dans la pluralité de canaux de transfert de chaleur (211), et une extrémité du composant de conduction (22) faisant saillie depuis le composant de paroi de manière à être connecté électriquement à un dispositif d'énergie externe,
**caractérisé en ce que** le corps de stockage d'énergie (21) est en outre pourvu de canaux de ventilation (212) pénétrant à travers le corps de stockage d'énergie (21) le long d'une deuxième direction (Y), les canaux de ventilation (212) et les canaux de transfert de chaleur (211) étant séparés les uns des autres, et la deuxième direction (Y) croise la première direction (X).

2. Dispositif de stockage d'énergie (1) selon la revendication 1, dans lequel le corps de stockage d'énergie (21) est un composant structurel cubique en magnésium ou en alliage contenant du magnésium.

3. Dispositif de stockage d'énergie (1) selon la revendication 1, dans lequel le corps de stockage d'énergie (21) comprend une pluralité de sous-modules de stockage d'énergie (21a) reliés entre eux, et chaque sous-module de stockage d'énergie (21a) est pourvu d'un canal de transfert de chaleur (211) pénétrant à travers le sous-module de stockage d'énergie (21a) le long de la première direction (X).

4. Dispositif de stockage d'énergie (1) selon la revendication 1, dans lequel le corps de stockage d'énergie (21) comprend une pluralité de sous-modules de stockage d'énergie (21a) reliés entre eux, chaque sous-module de stockage d'énergie (21a) est un composant structurel cubique, et un canal de transfert de chaleur (211) s'étendant le long de la première direction (X) est formé entre au moins deux sous-modules de stockage d'énergie adjacents (21a).

5. Dispositif de stockage d'énergie (1) selon la revendication 4, dans lequel chaque sous-module de stockage d'énergie (21a) comprend des premiers évidements préfabriqués (211a) pénétrant à travers le sous-module de stockage d'énergie (21a) le long de la première direction (X), les premiers évidements préfabriqués (211a) sont situés à quatre coins du sous-module de stockage d'énergie (21a), et les premiers évidements préfabriqués (211a) de quatre sous-modules de stockage d'énergie adjacents (21a) forment ensemble un canal de transfert de chaleur (211).

6. Dispositif de stockage d'énergie (1) selon la revendication 4, dans lequel chaque sous-module de stockage d'énergie (21a) comprend des deuxièmes évidements préfabriqués (211b) pénétrant à travers le sous-module de stockage d'énergie (21a) le long de la première direction (X), les deuxièmes évidements préfabriqués (211b) sont situés sur au moins deux surfaces du sous-module de stockage d'énergie (21a), et les deuxièmes évidements préfabriqués (211b) de deux sous-modules de stockage d'énergie adjacents (21a) forment ensemble un canal de transfert de chaleur (211).

7. Dispositif de stockage d'énergie (1) selon la revendication 1, dans lequel le composant de conduction (22) est un fil de résistance entier logé en continu dans la pluralité de canaux de transfert de chaleur (211).

8. Dispositif de stockage d'énergie (1) selon la revendication 1, dans lequel le composant de conduction (22) est une pluralité de fils de résistance ou une pluralité de tiges chauffantes électriques logées dans la pluralité de canaux de transfert de chaleur (211), et la pluralité de fils de résistance ou la pluralité de tiges chauffantes électriques est connectée bout à bout en séquence.

9. Dispositif de stockage d'énergie (1) selon la revendication 1, dans lequel le dispositif de stockage d'énergie (1) comprend en outre un ventilateur de refroidissement (30), le composant de paroi du boîtier (10) comprend une première paroi (11) et une deuxième paroi (12) disposées de manière opposée le long de la deuxième direction (Y), la première paroi (11) est pourvue d'une sortie d'air (111), la sortie d'air (111) est pourvue d'une pipeline pour communiquer avec un dispositif externe, et le ventilateur de refroidissement (30) est disposé sur la deuxième paroi (12) et est disposé en correspondance avec les canaux de ventilation (212).

10. Dispositif de stockage d'énergie (1) selon la revendication 9, dans lequel la sortie d'air (111) du boîtier (10) est pourvue d'un rideau de ventilation auto-portant.

11. Dispositif de stockage d'énergie (1) selon la revendication 9, dans lequel le composant de paroi du boîtier (10) comprend en outre une troisième paroi (13) et une quatrième paroi (14) disposées de manière opposée le long de la première direction (X), l'une extrémité du composant de conduction (22) fait saillie depuis la troisième paroi (13), et des espaces prédéterminés sont respectivement maintenus entre le corps de stockage d'énergie (21) et la troisième paroi (13) et entre le corps de stockage d'énergie (21) et la quatrième paroi (14).

12. Dispositif de stockage d'énergie (1) selon la revendication 1, dans lequel une surface extérieure du boîtier (10) est pourvue d'une couche d'isolation thermique.

13. Dispositif de stockage d'énergie (1) selon la revendication 1, dans lequel le composant de stockage de chaleur (20) comprend en outre une base (23) pour supporter le corps de stockage d'énergie (21), et le corps de stockage d'énergie (21) et la base (23) situés dans le composant de stockage de chaleur (20) sont fermement reliés en tant qu'ensemble par un dispositif de pressage (24) et fixés au composant de paroi du boîtier (10).

14. Dispositif de stockage d'énergie (1) selon la revendication 13, dans lequel le dispositif de pressage (24) comprend un couvercle de pressage (241) et une attache (242) disposée sur le couvercle de pressage (241), le couvercle de pressage (241) est pressé contre le corps de stockage d'énergie (21), et l'attache (242) est reliée de manière fixe au composant de paroi du boîtier (10).

15. Dispositif de stockage d'énergie (1) selon la revendication 1, dans lequel le dispositif de stockage d'énergie (1) comprend en outre un dispositif de surveillance de température et une commande connectée électriquement au dispositif de surveillance de température, et le dispositif de surveillance de la température est disposé dans le boîtier (10) ou le corps de stockage d'énergie (21).

16. Système de stockage d'énergie appliqué à une éolienne, dans lequel le système de stockage d'énergie comprend :
un convertisseur (2) ; et
le dispositif de stockage d'énergie (1) selon l'une des revendications 1 à 15, dans lequel le composant de conduction (22) du dispositif de stockage d'énergie (1) est connecté électriquement au convertisseur (2).

17. Procédé de stockage d'énergie appliquée au système de stockage d'énergie selon la revendication 16, comprenant :
déterminer (S 1) si le convertisseur (2) nécessite une consommation d'énergie supplémentaire ;
à condition que le convertisseur (2) nécessite une consommation d'énergie supplémentaire, activer (S21) un commutateur (25) entre le composant de conduction (22) et le convertisseur (2) par l'intermédiaire de la commande, de sorte que le dispositif de stockage d'énergie (1) soit connecté électriquement au convertisseur (2) ;
à condition que le convertisseur (2) ne nécessite pas de consommation d'énergie supplémentaire, désactiver (S22) le commutateur (25) entre le composant de conduction (22) et le convertisseur (2) par l'intermédiaire de la commande, de sorte que le dispositif de stockage d'énergie (1) reste déconnecté du convertisseur (2).

18. Procédé de stockage d'énergie selon la revendication 17, dans lequel, après avoir activé (S21) le commutateur (25) entre le composant de conduction (22) et le convertisseur (2) par l'intermédiaire de la commande, de sorte que le dispositif de stockage d'énergie (1) soit connecté électriquement au convertisseur (2), le procédé comprend en outre :
obtenir (S3) une température du dispositif de stockage d'énergie (1) et comparer la température à un seuil de température admissible du dispositif de stockage d'énergie (1) ;
démarrer (S4), lorsque la température est supérieure au seuil de température admissible, un ventilateur de refroidissement (30) du dispositif de stockage d'énergie (1) par l'intermédiaire de la commande.

19. Éolienne comprenant le système de stockage d'énergie selon la revendication 16.
